# EUROPÄISCHE PATENTSCHRIFT

(11) **EP 0 908 705 B1**
(45) Veröffentlichungstag und Bekanntmachung des Hinweises auf die Patenterteilung: **16.06.2004**
(21) Anmeldenummer: 98117064.0
(22) Anmeldetag: 09.09.1998
(51) Int. Cl.: G01F 1/84

(54) **Massendurchflussmessgerät**
Mass flowmeter
Débitmètre massique

(30) Priorität: 07.10.1997 DE 19744303; 07.01.1998 DE 19800225; 20.04.1998 DE 19817453; 10.06.1998 DE 19825775
(43) Veröffentlichungstag der Anmeldung: 14.04.1999
(73) Patentinhaber: Krohne AG, 4019 Basel (CH)
(72) Erfinder: van der Pol, Ronald, Dipl.-Ing., 5925 AK Venlo (NL); Hussain, Yousif A., Dr., Weston Fevell (GB)
(74) Vertreter: Gesthuysen, von Rohr & Eggert

(56) Entgegenhaltungen:
- EP-A- 0 261 435
- EP-A- 0 317 340
- EP-A- 0 415 129
- EP-A- 0 469 448
- EP-A- 0 578 113
- WO-A-95/16897
- WO-A-98/38479

## Beschreibung

Die Erfindung betrifft ein Massendurchflußmeßgerät, das nach dem Coriolis-Prinzip arbeitet, mit einer ein strömendes Medium führenden, im wesentlichen geraden Coriolis-Leitung, mit mindestens einem der Coriolis-Leitung zugeordneten, die Coriolis-Leitung anregenden Schwingungserzeuger, mit mindestens einem der Coriolis-Leitung zugeordneten, Coriolis-Kräfte und/oder auf Coriolis-Kräften beruhende Coriolis-Schwingungen erfassenden Meßwertaufnehmer und mit einem die Coriolis-Leitung aufnehmenden Aufnahmezylinder. Ein solches Massendurchflußmeßgerät ist aus der EP 0 415 129 A2 bekannt

Zuvor ist gesagt worden, daß zu dem in Rede stehenden Massendurchflußmeßgerät u. a. gehören mindestens ein der Coriolis-Leitung "zugeordneter" Schwingungserzeuger und mindestens ein der Coriolis-Leitung "zugeordneter" Meßwertaufnehmer. In der Regel sind der Schwingungserzeuger oder die Schwingungserzeuger, jedenfalls ein Teil des Schwingungserzeugers bzw. ein Teil der Schwingungserzeuger und der Meßwertaufnehmer bzw. die Meßwertaufnehmer, jedenfalls ein Teil des Meßwertaufnehmers bzw. ein Teil der Meßwertaufnehmer mit der Coriolis-Leitung verbunden. Da das jedoch nicht zwingend ist, ist der Ausdruck "zugeordnet" - statt des Ausdruckes "verbunden" - verwendet worden.

Bei Massendurchflußmeßgeräten, die nach dem Coriolis-Prinzip arbeiten, unterscheidet man grundsätzlich zwischen einerseits solchen, deren Coriolis-Leitung zumindest im wesentlichen gerade ausgeführt ist, und andererseits solchen, deren Coriolis-Leitung schleifenförmig ausgeführt ist. Außerdem unterscheidet man bei den in Rede stehenden Massendurchflußmeßgeräten zwischen einerseits solchen, die nur eine Coriolis-Leitung aufweisen, und andererseits solchen, die zwei Coriolis-Leitungen aufweisen; bei den Ausführungsformen mit zwei Coriolis-Leitungen können diese strömungstechnisch in Reihe oder parallel zueinander liegen.

In jüngerer Zeit setzen sich zunehmend die Massendurchflußmeßgeräte mit nur einer im wesentlichen geraden Coriolis-Leitung durch. Massendurchflußmeßgeräte mit einer geraden Coriolis-Leitung sind in Bezug auf den mechanischen Aufbau einfach, d. h. mit vergleichsweise geringen Kosten herstellbar, auf den Innenflächen der Coriolis-Leitung gut bearbeitbar, z. B. polierbar, weisen einen geringen Druckverlust auf und sind selbstentleerend.

Massendurchflußmeßgeräte mit nur einer geraden Coriolis-Leitung sind trotz aller Vorteile unter einer Mehrzahl von Gesichtspunkten problematisch.

Zunächst treten aufgrund der gerade ausgeführten Coriolis-Leitung, bedingt durch thermisch verursachte Ausdehnungen bzw. Spannungen, Abhängigkeiten der Meßgenauigkeit von der Temperatur des strömenden Mediums auf. Im Extremfall können die thermisch bedingten Spannungen sogar zu mechanischen Schäden, nämlich zu Spannungsrissen, an der Coriolis-Leitung führen. Mit diesem Problem beschäftigen sich beispielsweise die DE 41 24 295 A1 und die DE 196 01 342 A1.

Darüber hinaus ist bei Massendurchflußmeßgeräten mit nur einer Coriolis-Leitung die Einkopplung externer Störungen stärker als bei Massendurchflußmeßgeräten, bei denen zwei parallel verlaufende Coriolis-Leitungen nach Art einer Stimmgabel betrieben werden, weil bei Massendurchflußmeßgeräten mit nur einer Coriolis-Leitung der Massenschwerpunkt des Massendurchflußmeßgerätes nicht ruht. Mit der Minimierung der Einkopplung äußerer Störungen, d. h. von Schwingungen im umgebenden Rohrleitungssystem, befassen sich die DE 44 23 168 A1 und die DE 196 32 500 A1.

Schließlich befaßt sich die DE 197 32 605 A1 mit der bei Massendurchflußmeßgeräten mit einer geraden Coriolis-Leitung auftretenden Schwierigkeit bei der Messung der bei diesen Massendurchflußmeßgeräten extrem geringen Phasendifferenz zwischen zwei von den Meßwertaufnehmern gelieferten Meßsignalen, die dem Massendurchfluß proportional sind. Die im Industriebereich gängigen Anforderungen an die Meßgenauigkeit der Massendurchflußmeßgeräte erfordern eine Auflösung der Phasendifferenz in der Größenordnung von 1·10⁻⁵ Grad.

Über die zuvor angesprochenen Probleme hinaus, die in den angeführten Druckschriften einer Lösung bereits näher gebracht worden sind, besteht ein weiteres Problem von Massendurchflußmeßgeräten mit einer geraden Coriolis-Leitung darin, daß das Verhältnis der Gesamtlänge des Massendurchflußmeßgerätes zur Nennweite der Coriolis-Leitung stets groß ist. Die, gemessen an der Nennweite der Coriolis-Leitung große Gesamtlänge des Massendurchflußmeßgerätes resultiert aus der Notwendigkeit, bei gegebenem Durchmesser der Coriolis-Leitung eine freie Länge der Coriolis-Leitung zur Verfügung zu stellen, auf der die Coriolis-Leitung mit der notwendigen Amplitude schwingen kann. Bei einer zu hohen Steifigkeit der Coriolis-Leitung kann sich auf der Coriolis-Leitung keine Schwingung mit einer, eine vernünftige Meßgenauigkeit gewährleistenden Amplitude einstellen. Die resultierende große Gesamtlänge eines Massendurchflußmeßgerätes mit einer geraden Coriolis-Leitung ist selbstverständlich unerwünscht, da der zur Verfügung stehende Raum zur Installation in der chemischen Industrie und der Lebensmittelindustrie, in der diese Massendurchflußmeßgeräte beispielsweise eingesetzt werden, begrenzt ist.

In der EP 0 415 129 A2, von der die Erfindung ausgeht, ist ein Coriolis-Massendurchflußmeßgerät beschrieben, das im wesentlichen aus einer Meßleitung in Form eines dickwandigen, geradlinigen Rohres besteht, daß an seinen beiden Ende mit zwei flexiblen Anschlußstücken mit der weiteren Rohrleitung verbunden ist. Aufgrund der beiden flexiblen Anschlußstücke ist eine geringfügige Schwingung der Meßleitung um eine Schwenkachse möglich. Bei der Verschwenkung des Rohres um die Schwenkachse folgen die Enden des Rohres einer linearen Bewegung, abwechselnd nach oben und nach unten. Die Meßmethode bei dem aus der EP 0 415 129 A2 bekannten Gerät beruht nun darauf, daß der Coriolis-Effekt zur Erzeugung einer solchen Schwingung des Rohres verwendet wird, die sich der von außen angeregten Verschwenkung überlagert, wobei die Schwenkachse des Rohres bezogen auf die Länge des Rohres außermittig angeordnet ist. Dabei wirken die erzeugten Coriolis-Kräfte in der gleichen Ebene, in der auch die Verschwenkung des Rohres erfolgt, so daß es bei einer solchen Bewegung der Enden der Rohre verbleibt, die längs einer Geraden verläuft.

In der WO 95/16897 ist ein Coriolis-Massendurchflußmeßgerät beschrieben, bei dem die Coriolis-Leitung in einem radialen Schwingungsmode angeregt wird. Dabei werden längs der Wand der Coriolis-Leitung verlaufende Coriolis-Kräfte erzeugt, die zu einer Deformierung der Querschnittsform der Coriolis-Leitung in Abhängigkeit von dem Massendurchfluß führen.

Aus der EP 0 578 113 A2 ist ein Coriolis-Massendurchflußmeßgerät mit einem Änderungen der Schwingungslänge der Coriolis-Leitung erfassenden Längenänderungssensor zur schwingungslängen- und spannungsabhängigen Korrektur des Meßwerts bekannt.

Weiterhin ist in der EP 0 261 435 A2 ein Coriolis-Massendurchflußmeßgerät beschrieben, daß ein mechanisches Schwingsystem mit zwei geraden Meßrohren aufweist, die an beiden Enden eingespannt sind. Das mechanische Schwingsystem ist axial in einem Trägerrohr angeordnet. In der Mitte der Meßrohre ist ein Schwingungserreger angeordnet, der die beiden Meßrohre in gegenphasige Biegeschwingungen versetzt. Ferner sind zwei Temperatursensoren vorgesehen, nämlich einer zur Messung der Temperatur eines Trägerrohres und einer zur Messung der Temperatur des mechanischen Schwingsystems. Eine Korrekturschaltung empfängt die von den beiden Temperatursensoren erzeugten Temperatursensorsignale und erteilt dem Meßsignal aufgrund der gemessenen Temperaturen eine Korrektur zur Beseitigung des Temperatureinflusses auf das Meßergebnis.

In der EP 0 317 340 A2 ist ein Coriolis-Massendurchflußmeßgerät beschrieben, das eine Coriolis-Leitung aufweist, die über zwei zylindrische Bälge mit einem Außengehäuse verbunden ist. Die Bälge absorbieren die Wärmeausdehnung der Coriolis-Leitung und des äußeren Rohrsystem und schützen die Coriolis-Leitung darüber hinaus vor aus dem äußeren Rohrsystem in die Coriolis-Leitung einkoppelnden Schwingungen.

In der EP 0 469 448 A1 ist schließlich ein solches Coriolis-Massendurchflußmeßgerät beschrieben, das bei einer bestimmten Baulänge eine relativ geringe Eigenfrequenz bzw. bei einer bestimmten Eigenfrequenz eine relativ geringe Baulänge aufweist, und zwar dadurch, daß der Schwingungserzeuger über einen Pendelarm an der Coriolis-Leitung angreift, so daß die Coriolis-Leitung zur Torsionsschwingungen und zu Biegeschwingungen angeregt wird.

Der Erfindung liegt die Aufgabe zugrunde, ein Massendurchflußmeßgerät anzugeben, bei dem bei wenigstens gleichbleibender Meßgenauigkeit und gleichbleibender Dicke der Coriolis-Leitung die Länge der Coriolis-Leitung weiter verringert werden kann, wobei gleichzeitig sichergestellt ist, daß thermische Ausdehnungen bzw. Spannungen der Coriolis-Leitung nicht zu mechanischen Schäden des Massendurchflußmeßgerät führen.

Die zuvor aufgezeigte Aufgabe ist erfindungsgemäß dadurch gelöst, daß die Coriolis-Leitung über einen Einlaß und über einen Auslaß im Aufnahmezylinder in axialer und in radialer Richtung beweglich gelagert ist, die Enden der Coriolis-Leitung von den Schwingungserzeugern zu sich aus transversalen Bewegungen der Enden der Coriolis-Leitung zusammensetzenden, rotatorischen taumelnden Bewegungen um die Längsachse der Coriolis-Leitung anregbar sind und die rotatorischen taumelnden Bewegungen des einen Endes der Coriolis-Leitung um 180° phasenverschoben gegenüber den rotatorischen taumelnden Bewegungen des anderen Endes der Coriolis-Leitung sind.

Erfindungsgemäß ist eine Deformation der Coriolis-Leitung, wie bei dem bekannten Massendurchflußmeßgerät, von dem die Erfindung ausgeht, nicht erforderlich; auch eine "praktisch grenzenlos" steife Coriolis-Leitung eines erfindungsgemäßen Coriolis-Massendurchflußmeßgeräts läßt sich so anregen, daß in Verbindung mit einem in der Coriolis-Leitung strömenden Medium Coriolis-Kräfte erzeugt werden. Da ein Deformieren der Coriolis-Leitung nicht erforderlich ist, kann die Coriolis-Leitung, bezogen auf ihre Nennweite, mit geringer Länge ausgeführt werden, so daß dann auch die Gesamtlänge des erfindungsgemäßen Massendurchflußmeßgerätes relativ gering sein kann, insbesondere dann, wenn auch der Einlaß und der Auslaß eine geringe Länge aufweisen. Bei optimaler Dimensionierung der Coriolis-Leitung, des Aufnahmezylinders und der der Lagerung der Coriolis-Leitung dienenden Bauteile läßt sich z. B. ein Massendurchflußmeßgerät realisieren, das bei einem maximalen Massendurchfluß von 300 kg/min nur eine Gesamtlänge von 20 cm bis maximal 30 cm hat.

Bei erfindungsgemäß ausgeführten Massendurchflußmeßgeräten ist weiter vorteilhaft, daß die Frequenz der Schwingungen der Coriolis-Leitung praktisch temperaturunabhängig ist, da die Coriolis-Leitung weder auf Biegung noch auf Torsion beansprucht wird.

Eine besonders bevorzugte Ausführungsform des erfindungsgemäßen Massendurchflußmeßgerätes ist dadurch gekennzeichnet, daß der Aufnahmezylinder das Meßgerätgehäuse des Massendurchflußmeßgerätes bildet, wobei vorzugsweise der Aufnahmezylinder als - relativ schwerer - Metallblock mit Ausnehmungen zur Aufnahme von Coriolis-Leitung, Schwingungserzeuger und Meßwertaufnehmer ausgebildet ist. Diese Ausführungsform eines erfindungsgemäßen Massendurchflußmeßgerätes kann ohne weiteres zwischen den Flanschen angrenzender Rohrleitungen eingeklemmt sein, wobei - natürlich in Grenzen - ein Nicht-Fluchten der Coriolis-Leitung mit den angrenzenden Rohrleitungen nicht zu Problemen führt.

Das erfindungsgemäße Massendurchflußmeßgerät kann aber auch, wie im Stand der Technik eigentlich üblich, zusätzlich zu dem Aufnahmezylinder ein besonderes Meßgerätgehäuse aufweisen, das dann zweckmäßigerweise beidseitig Flansche aufweist. Bei dieser Ausführungsform sind zwischen der Coriolis-Leitung und dem Meßgerätgehäuse zwei Verbindungsleitungen vorgesehen. Vorzugsweise sind die Verbindungsleitungen an den Einlaß und den Auslaß - etwa in der Mitte der Erweiterung - angeschlossen. Der gewollten - "grenzenlosen" - Beweglichkeit der Coriolis-Leitung ist dienlich, wenn die zuvor angesprochenen Verbindungsleitungen als Membranen ausgebildet sind.

Bei erfindungsgemäßen Massendurchflußmeßgeräten muß bei der Realisierung der Maßnahmen, die zu den erforderlichen Schwingungen der Coriolis-Leitung führen, natürlich auch berücksichtigt werden, daß die Coriolis-Leitung im Aufnahmezylinder in axialer und in radialer Richtung beweglich gelagert ist. Nicht alle im Stand der Technik bekannten Maßnahmen zur Erzeugung von Schwingungen der Coriolis-Leitung sind auch bei dem erfindungsgemäßen Massendurchflußmeßgerät anwendbar.

Bei dem erfindungsgemäßen Massendurchflußmeßgerät sind als Schwingungserzeuger jeweils um 90° gegeneinander versetzte, transversale Bewegungen generierende Schwingungserzeugerelemente vorgesehen und die einzelnen Schwingungserzeugerelemente werden, um 90° phasenversetzt, sinusförmig erregt. Hierbei handelt es sich also um das Generieren von rotatorischen Bewegungen durch die Superposition von transversalen Bewegungen.

Um thermisch verursachte Ausdehnungen bzw. Spannungen, die z. B. durch sich ändernde Temperaturen des fließenden Mediums erzeugt werden, möglichst gering zu halten, wird nach einer weiteren Lehre der Erfindung vorgeschlagen, daß zumindest die Coriolis-Leitung aus einem Material mit einer relativ geringen Wärmeausdehnung besteht. Als ein solches Material kann insbesondere Duplex, rostfreier Stahl, Nickel, Titan oder karbon- oder glasfaserverstärktes Material verwendet werden.

Im einzelnen gibt es nun eine Vielzahl von Möglichkeiten, das erfmdungsgemäße Massendurchflußmeßgerät auszugestalten und weiterzubilden. Dazu wird verwiesen einerseits auf die den Patentansprüchen 1 und 12 nachgeordneten Patentansprüche, andererseits auf die Beschreibung verschiedener Ausführungsbeispiele eines Massendurchflußmeßgerätes in Verbindung mit der Zeichnung. In der Zeichnung zeigt
- Fig. 1: ein erstes Ausführungsbeispiel eines Massendurchflußmeßgerätes im Schnitt,
- Fig. 2: ein zweites Ausführungsbeispiel eines Massendurchflußmeßgerätes im Schnitt,
- Fig. 3: ein drittes Ausführungsbeispiel eines Massendurchflußmeßgerätes im Schnitt,
- Fig. 4 a) - c): ein viertes Ausführungsbeispiel eines Massendurchflußmeßgerätes im Schnitt,
- Fig. 5: eine Prinzipdarstellung der Anregungs-Schwingung beim ersten Ausführungsbeispiel eines Massendurchflußmeßgerätes,
- Fig. 6 a), b): eine Prinzipdarstellung der Bewegungen des Pendels beim ersten Ausführungsbeispiel eines Massendurchflußmeßgerätes,
- Fig. 7: eine Prinzipdarstellung einer durch Coriolis-Kräfte angeregten Coriolis-Schwingung einer Coriolis-Leitung eines Massendurchflußmeßgerätes,
- Fig. 8: eine numerische Simulation der Deformationen bei der Anregungs-Schwingung,
- Fig. 9: eine numerische Simulation der Deformationen bei der CoriolisSchwingung,
- Fig. 10: ein Massendurchflußmeßgerätes gemäß einem bevorzugten Ausführungsbeispiel der Erfindung,
- Fig. 11: einen Schnitt durch das in Fig. 10 dargestellte Massendurchflußmeßgerät, längs der Linie XI - XI, und
- Fig. 12: im Schnitt, ein weiteres Ausführungsbeispiel eines erfindungsgemäßen Massendurchflußmeßgerätes.

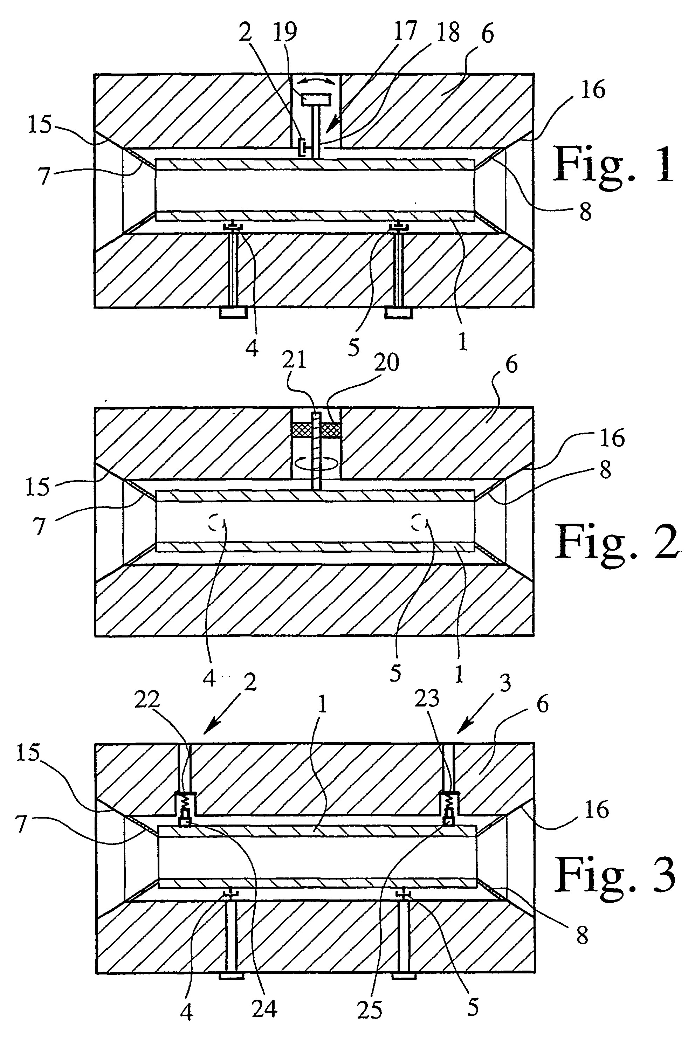

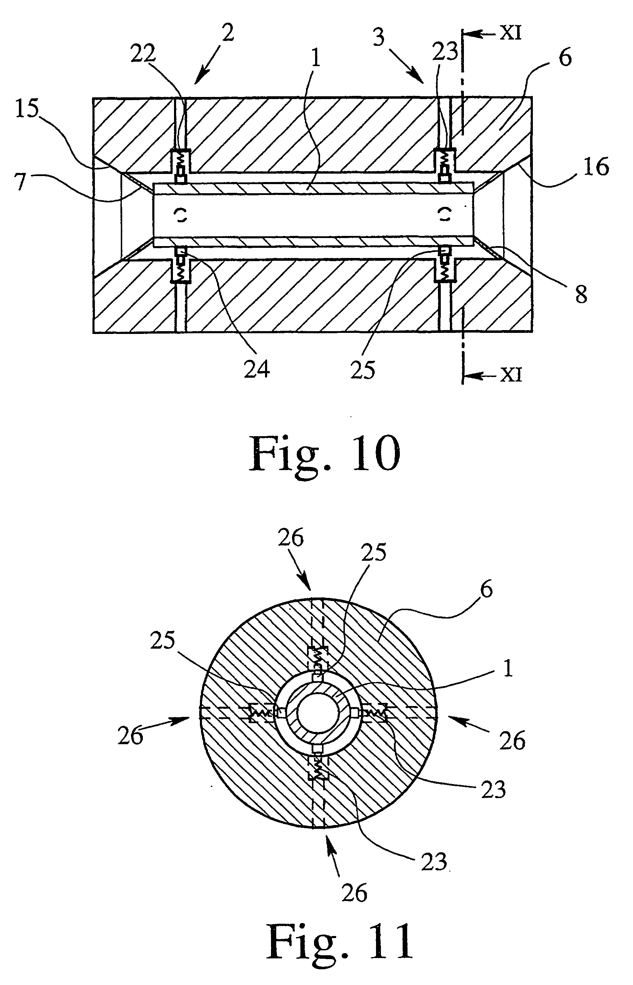

Die in den Fig. 1 bis 4 und in den Fig. 10 bis 12 dargestellten Massendurchflußmeßgeräte arbeiten, wie bekannt, nach dem Coriolis-Prinzip und bestehen in ihrem grundsätzlichen Aufbau aus einer ein strömendes Medium führenden, geraden Coriolis-Leitung 1, aus einem der Coriolis-Leitung 1 zugeordneten, die Coriolis-Leitung 1 anregenden Schwingungserzeuger 2 (Fig. 1 und 2) oder aber aus zwei der Coriolis-Leitung 1 zugeordneten, die Coriolis-Leitung **1** anregenden Schwingungserzeugern 2, 3 (Fig. 3 und 4 sowie 10 bis 12), aus zwei der Coriolis-Leitung 1 zugeordneten, Coriolis-Kräfte und/oder auf Coriolis-Kräften beruhende Coriolis-Schwingungen erfassenden Meßwertaufnehmern 4, 5 und aus einem die Coriolis-Leitung 1 aufnehmenden Aufnahmezylinder 6.

Wie dies die Fig. 1, 2, 3, 4, und 10 im einzelnen zeigen ist, die Coriolis-Leitung 1 über einen sich konisch erweiternden Einlaß 7 und einen sich ebenfalls konisch erweiternden Auslaß 8 im Aufnahmezylinder 6 schwimmend gelagert. Durch diese schwimmende Lagerung ist eine Deformation der Coriolis-Leitung 1 nicht erforderlich; auch eine "praktisch grenzenlos" steife Coriolis-Leitung 1, die schwimmend gelagert ist, läßt sich so anregen, daß in Verbindung mit einem in der Coriolis-Leitung 1 strömenden Medium Coriolis-Kräfte erzeugt werden.

Die Fig. 1, 2, und 3 sowie die Fig. 10 und 11 zeigen Ausführungsformen von Massendurchflußmeßgeräten, die dadurch gekennzeichnet wird, daß der Aufnahmezylinder 6 das Meßgerätgehäuse des Massendurchflußmeßgerätes bildet, wobei der Aufnahmezylinder 6 als - relativ schwerer - Metallblock mit Ausnehmungen zur Aufnahme von Coriolis-Leitung 1, Schwingungserzeuger 2 bzw. Schwingungserzeuger 2, 3 und Meßwertaufnehmer 4, 5 ausgebildet ist. Diese Ausführungsformen können ohne weiteres zwischen den - nicht dargestellten - Flanschen angrenzender Rohrleitungen eingeklemmt sein, wobei - natürlich in Grenzen - ein Nicht-Fluchten der Coriolis-Leitung 1 mit den angrenzenden Rohrleitungen nicht zu Problemen führt.

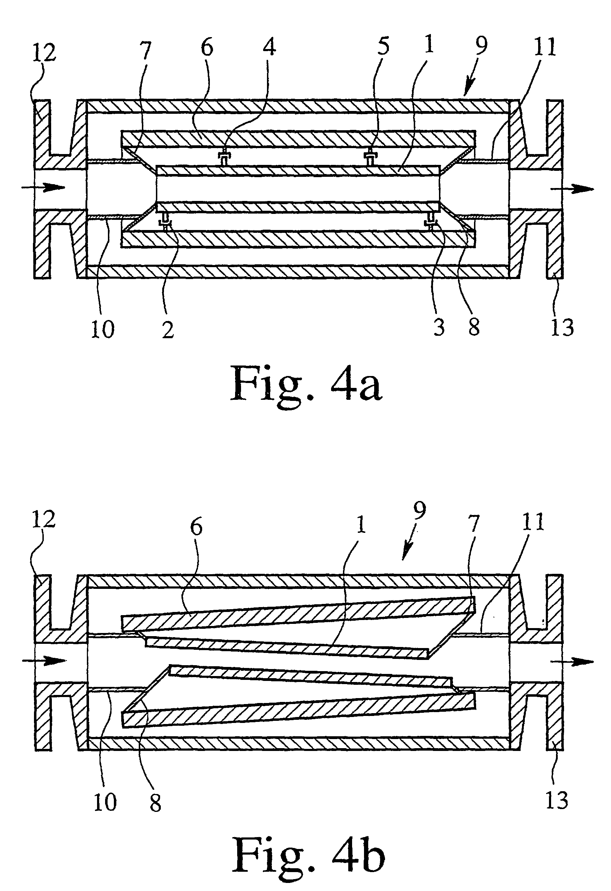

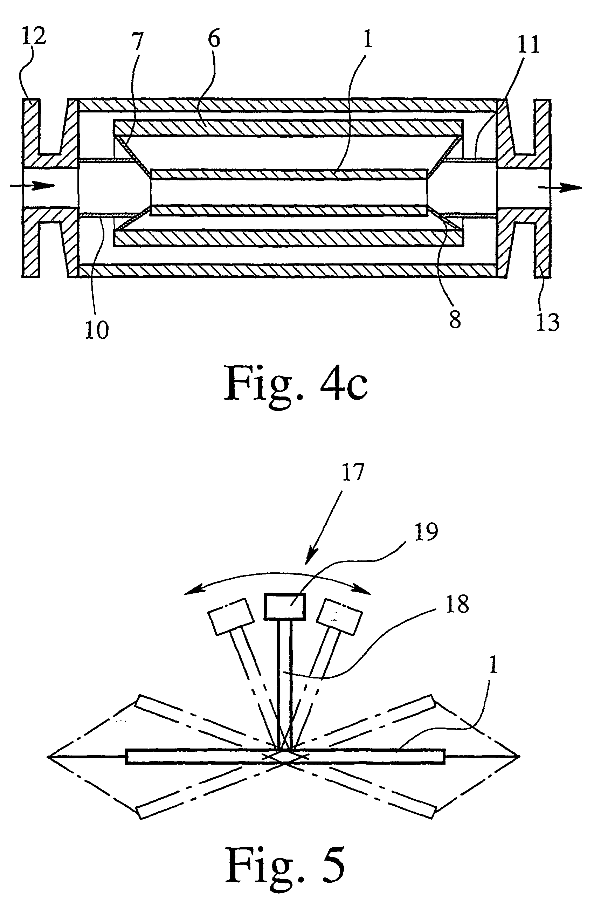

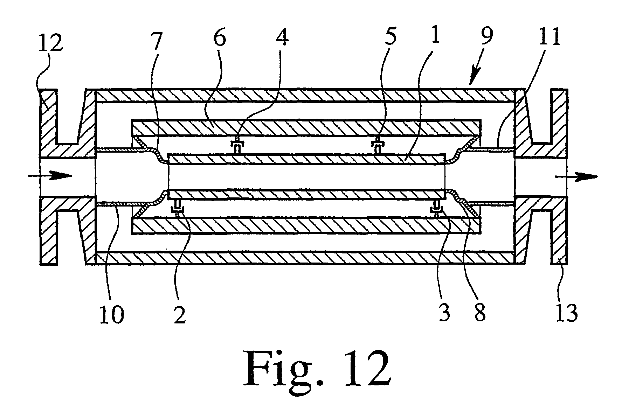

Im Gegensatz zu dem, was die Fig. 1, 2 und 3 sowie den Fig. 10 und 11 zeigen, zeigen die Fig. 4 und 12 ein Ausführungsbeispiel eines Massendurchflußmeßgerätes, das dadurch gekennzeichnet ist, daß zusätzlich zu dem Aufnahmezylinder 6 noch ein Meßgerätgehäuse 9 vorhanden ist und zwischen der Coriolis-Leitung 1 und dem Meßgerätgehäuse 9 zwei Verbindungsleitungen 10, 11 vorgesehen sind. Wie die Fig. 4 zeigt, sind die Verbindungsleitungen 10, 11 an den sich konisch erweiternden Einlaß 7 und den sich ebenfalls konisch erweiternden Auslaß 8 - etwa in der Mitte der Erweiterung - angeschlossen. Im übrigen sind die Verbindungsleitungen 10, 11 ebenso wie der Einlaß 7 und der Auslaß 8 als Membranen ausgebildet und ist das Meßgerätgehäuse 9 mit Flanschen 12, 13 versehen.

Im Unterschied zu der Fig. 4 zeigt die Fig. 12 ein Ausführungsbeispiel eines Massendurchflußmeßgerätes, das dadurch gekennzeichnet ist, daß der Einlaß 7 und der Auslaß 8 bogenförmig ausgeführt sind. Durch diese Ausführung können sich der Einlaß 7 und der Auslaß 8 jeweils geringfügig ausdehnen, ohne das große Spannungen im Einlaß 7 oder im Auslaß 8 auftreten, so daß auch keine großen Spannungen auf die Coriolis-Leitung 1 übertragen werden. Ebenso kann sich die Co-riolis-Leitung 1 selber geringfügig ausdehnen, ohne das in ihr große Spannungen auftreten, da der Einlaß 7 und der Auslaß 8 auch eine solche Ausdehnung - selbstverständlich in geringem Maße - zulassen.

Fig. 4 a) zeigt ein Massendurchflußmeßgerät im statischen Zustand, d.h wenn keine Schwingungen vorhanden sind. Demgegenüber zeigt Fig. 4 b) das Massendurchflußmeßgerät bei einer vorhandenen Anregungs-Schwingung und Fig. 4 c) das Massendurchflußmeßgerät bei einer vorhandenen Coriolis-Schwingung. Sowohl beim Vorliegen einer Anregungs-Schwingung als auch beim Vorliegen einer Coriolis-Schwingung schwingt die Coriolis-Leitung 1 gegenphasig zum Aufnahmezylinder 6. Somit liegt ein ausbalanciertes System vor, bei dem nur sehr wenig Energie und nur geringfügig Schwingungen auf das Meßgerätgehäuse 9 übertragen wird.

In allen Ausführungsbeispielen nach den Fig. 1, 2 und 3 sowie den Fig. 10 und 11 schließen sich an die sich konisch erweiternden Ein- und Ausgänge 7, 8 sich konisch erweiternde Abschnitte 15, 16 des Aufnahmezylinders 6 an; das gilt nicht für das Ausführungsbeispiel nach Fig. 4.

Bei der Realisierung der Maßnahmen, die zu den erforderlichen Schwingungen der Coriolis-Leitung 1 führen, ist bei den einzelnen Ausführungsbeispielen von Massendurchflußmeßgeräten berücksichtigt, daß die Coriolis-Leitung 1 im Aufnahmezylinder 6 schwimmend gelagert ist.

Für die in den Fig. 1, 2, 3, 4 und 12 dargestellten Ausführungsbeispiele von Massendurchflußmeßgeräten gilt, daß der Schwingungserzeuger 2 (Fig. 1 und 2) bzw. die Schwingungserzeuger 2, 3 (Fig. 3, 4 und 12) die Coriolis-Leitung 1 zu Schwingungen um eine quer zur Längsachse der Coriolis-Leitung 1 verlaufende Schwingungsachse anregt bzw. anregen, - wobei die Schwingungsachse in der senkrecht zur Längsachse der Coriolis-Leitung 1 verlaufenden Mittelebene des Massendurchflußmeßgerätes bzw. der Coriolis-Leitung 1 liegt. Die Coriolis-Leitung 1 schwingt also symmetrisch zur senkrecht zur Längsachse der Coriolis-Leitung 1 verlaufenden Mittelebene, jedoch jeweils um 180° phasenverschoben.

Die Fig. 1 zeigt ein Ausführungsbeispiel eines Massendurchflußmeßgerätes, bei dem der Schwingungserzeuger 2 zwischen dem Aufnahmezylinder 6 und einem quer zur Längsachse der Coriolis-Leitung 1, in Längsrichtung im wesentlichen in der Mitte der Coriolis-Leitung 1 angebrachten Pendel 17 angreift. Zu dem Pendel 17 gehören ein Pendelarm 18 und eine Kompensationsmasse 19. Die Kompensationsmasse 19 ist so gewählt, daß die Eigenfrequenz des Pendels 17 so weit als möglich mit der Eigenfrequenz der Anregungs-Schwingung der Coriolis-Leitung 1 übereinstimmt.

Bei dem in Fig. 2 dargestellten Ausführungsbeispiel eines Massendurchflußmeßgerätes greift der Schwingungserzeuger 2 zwischen dem Aufnahmezylinder 6 und einem quer zur Längsachse der Coriolis-Leitung 1, in Längsrichtung im wesentlichen in der Mitte der Coriolis-Leitung 1 angebrachten, mit einer Kompensationsmasse 20 versehenen Torsionsstab 21 an.

Für das in Fig. 3 dargestellte Ausführungsbeispiel eines Massendurchflußmeßgerätes gilt, daß zwei Schwingungserzeuger 2, 3 in Längsrichtung der Coriolis-Leitung 1, links und rechts der Mitte, angeordnet sind, wobei die Schwingungserzeuger 2, 3 als auf Federelementen 22, 23 abgestützte Piezoelemente 24, 25 ausgeführt sind.

Die Fig. 5 zeigt für das erste Ausführungsbeispiel eines Massendurchflußmeßgerätes die Coriolis-Leitung 1 und das Pendel 17 in einer Prinzipdarstellung für die Anregungs-Schwingung. Man erkennt ohne weiteres, daß die Coriolis-Leitung 1 Schwingungen um eine quer zur Längsachse der Coriolis-Leitung 1 verlaufende Schwingungsachse ausführt. Die Schwingungsachse verläuft in Fig. 5 senkrecht zur Zeichenebene. Aus der Fig. 5 kann man auch entnehmen, daß die Coriolis-Leitung 1 aufgrund der schwimmenden Lagerung vielmehr keine Deformation erfährt. Deformiert werden praktisch nur die in Fig. 5 angedeuteten Membranen.

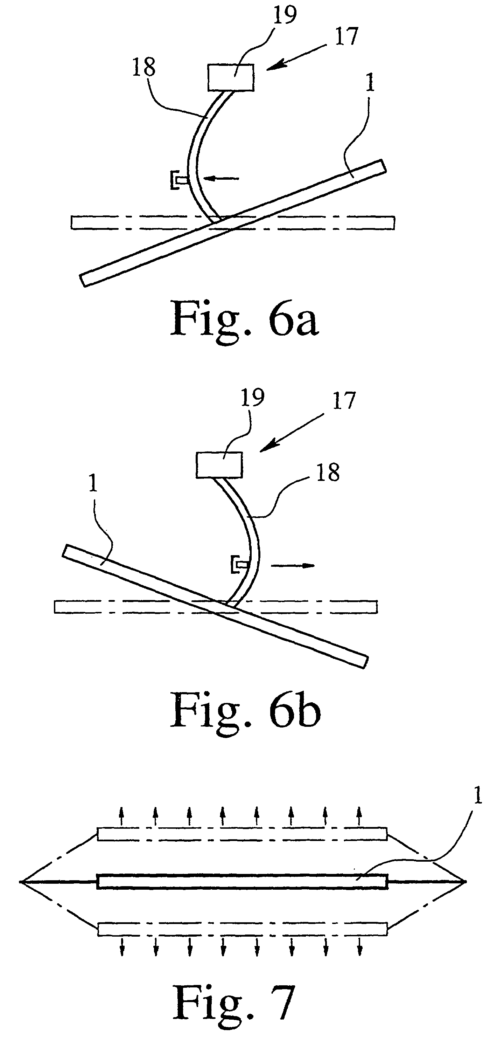

In den Fig. 6 a) und 6 b) sind zur Erläuterung der am Pendel 17 und an der Coriolis-Leitung 1 angreifenden Kräfte die Coriolis-Leitung 1 und das Pendel 17 in verschiedenen Phasen der Anregungs-Schwingung dargestellt. Dabei sind die Deformationen des Pendelarmes 18 jeweils stark vergrößert dargestellt.

Die Fig. 7 zeigt nun prinzipiell die der in Fig. 5 dargestellten Anregungs-Schwingung überlagerte Coriolis-Schwingung, die durch die beim Durchfluß des strömenden Mediums durch die Coriolis-Leitung 1 entstehenden Coriolis-Kräfte angeregt wird. Die Überlagerung der in Fig. 7 dargestellten Coriolis-Schwingung führt zu einer meßtechnisch erfaßbaren Phasendifferenz der Schwingung zweier Punkte rechts und links der Mitte der Coriolis-Leitung 1. Diese Phasendifferenz ist dem Massendurchfluß proportional, da die die Phasendifferenz verursachenden Coriolis-Kräfte dem Massendurchfluß durch die Coriolis-Leitung 1 proportional sind.

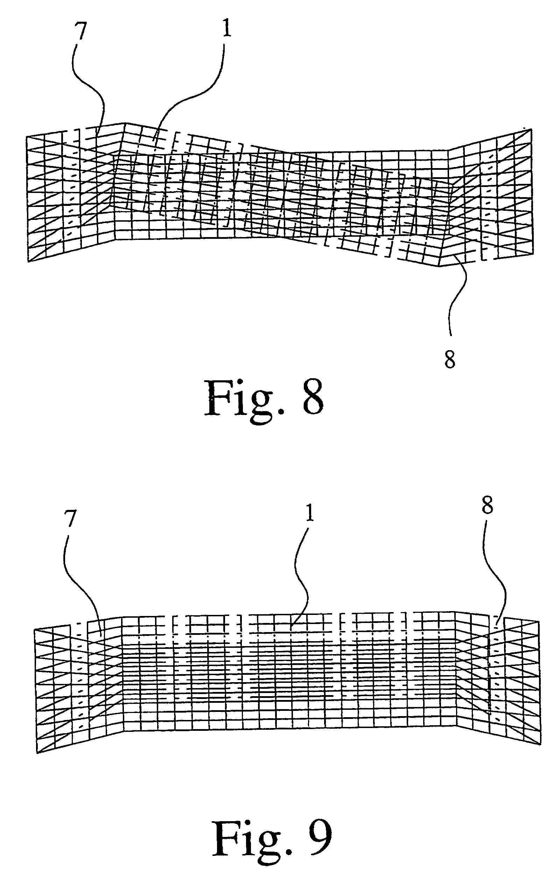

In den Fig. 8 und 9 sind die bei der Anregungs-Schwingung und die bei der Coriolis-Schwingung auftretenden Deformationen der Coriolis-Leitung 1, des Einlasses 7 und des Auslasses 8 dargestellt, ermittelt nach der Finite-Elemente-Methode. Man erkennt ohne weiteres, daß die Coriolis-Leitung 1 nahezu keine Deformation erfährt, während der Einlaß 7 und der Auslaß 8 die aus der jeweiligen Schwingung resultierenden Deformationen erfahren.

Für das Ausführungsbeispiel eines erfindungsgemäßen Massendurchflußmeßgerätes, das in den Fig. 10 und 11 dargestellt ist, gilt, daß die Schwingungserzeuger 2, 3 die Enden der Coriolis-Leitung 1 zu taumelnden Bewegungen um die Längsachse der Coriolis-Leitung 1 anregen, wobei die taumelnden Bewegungen der einen Hälfte der Coriolis-Leitung 1 um 180° phasenverschoben gegenüber den taumelnden Bewegungen der anderen Hälfte der Coriolis-Leitung 1 sind. Das ist im einzelnen dadurch realisiert, daß als Schwingungserzeuger 2 bzw. 3 jeweils um 90° gegeneinander versetzte, transversale Bewegungen generierende Schwingungserzeugerelemente 26 vorgesehen sind und die einzelnen Schwingungserzeugerelemente 26, um 90° phasenverschoben, sinusförmig erregt werden. Hierbei handelt es sich also um das Generieren einer rotatorischen Bewegung durch die Superposition von transversalen Bewegungen.

## Patentansprüche

1. Massendurchflußmeßgerät, das nach dem Coriolis-Prinzip arbeitet, mit einer ein strömendes Medium führenden, im wesentlichen geraden Coriolis-Leitung (1), mit der Coriolis-Leitung (1) zugeordneten, die Coriolis-Leitung (1) anregenden Schwingungserzeugern (2, 3), mit mindestens einem der Coriolis-Leitung (1) zugeordneten, Coriolis-Kräfte und/oder auf Coriolis-Kräften beruhende Coriolis-Schwingungen erfassenden Meßwertaufnehmer (4, 5) und mit einem die Coriolis-Leitung (1) aufnehmenden Aufnahmezylinder (6), **dadurch gekennzeichnet, daß** die Coriolis-Leitung (1) über einen Einlaß (7) und über einen Auslaß (8) im Aufnahmezylinder (6) in axialer und in radialer Richtung beweglich gelagert ist, die Enden der Coriolis-Leitung (1) von den Schwingungserzeugern (2, 3) zu sich aus transversalen Bewegungen der Enden der Coriolis-Leitung zusammensetzenden, rotatorischen taumelnden Bewegungen um die Längsachse der Coriolis-Leitung (1) anregbar sind und die rotatorischen taumelnden Bewegungen des einen Endes der Coriolis-Leitung (1) um 180° phasenverschoben gegenüber den rotatorischen taumelnden Bewegungen des anderen Endes der Coriolis-Leitung (1) sind.

2. Massendurchflußmeßgerät nach Anspruch 1, **dadurch gekennzeichnet, daß** als Schwingungserzeuger (2, 3) jeweils längs des Umfangs der Coriolis-Leitung (1) um 90° gegeneinander versetzte, transversale Bewegungen generierende Schwingungserzeugerelemente (26) vorgesehen sind und die einzelnen Schwingungserzeugerelemente (26) um 90° phasenverschoben, sinusförmig erregbar sind.

3. Massendurchflußmeßgerät nach Anspruch 1 oder 2, **dadurch gekennzeichnet, daß** der Einlaß (7) und der Auslaß (8) jeweils als sich konisch erweiternde Membran ausgebildet sind.

4. Massendurchflußmeßgerät nach einem der Ansprüche 1 bis 3, **dadurch gekennzeichnet, daß** der Einlaß (7) und der Auslaß (8) jeweils bogenförmig ausgeführt sind, so daß sich der Einlaß (7) und der Auslaß (8) jeweils geringfiigig ausdehnen können, ohne daß große Spannungen im Einlaß (7), im Auslaß (8) oder in der Coriolis-Leitung (1) auftreten.

5. Massendurchflußmeßgerät nach einem der Ansprüche 1 bis 4, **dadurch gekennzeichnet, daß** das Massendurchflußmeßgerät ein Meßgerätegehäuse aufweist und der Aufnahmezylinder (6) das Meßgerätgehäuse des Massendurchflußmeßgerätes bildet.

6. Massendurchflußmeßgerät nach Anspruch 5, **dadurch gekennzeichnet, daß** der Aufnahmezylinder (6) aus Metall hergestellt ist und Ausnehmungen zur Aufnahme der Coriolis-Leitung (1), des Schwingungserzeugers (2, 3) und des Meßwertaufnehmers (4, 5) aufweist.

7. Massendurchflußmeßgerät nach einem der Ansprüche 1 bis 4, **dadurch gekennzeichnet, daß** zusätzlich zu dem Aufnahmezylinder (6) ein Meßgerätgehäuse (9) vorhanden ist und die Coriolis-Leitung (1) mit dem Meßgerätgehäuse (9) mittels zweier Verbindungsleitungen (10, 11) verbunden ist.

8. Massendurchflußmeßgerät nach Anspruch 7, **dadurch gekennzeichnet, daß** die Verbindungsleitungen (10, 11) an den Einlaß (7) und an den Auslaß (8) angeschlossen sind.

9. Massendurchflußmeßgerät nach Anspruch 7 oder 8, **dadurch, gekennzeichnet, daß** die Verbindungsleitungen (10, 11) als Membranen ausgebildet sind.

10. Massendurchflußmeßgerät nach einem der Ansprüche 1 bis 9, **dadurch gekennzeichnet, daß** die Schwingungserzeuger (2, 3) als auf Federelementen (22, 23) abgestützte Piezoelemente (24, 25) ausgeführt sind.

11. Massendurchflußmeßgerät nach einem der Ansprüche 1 bis 10, **dadurch gekennzeichnet, daß** zumindest die Coriolis-Leitung (1) aus Duplex, rostfreiem Stahl, Nickel, Titan oder karbon- oder glasfaserverstärkten Materialien besteht.

12. Verfahren zur Schwingungsanregung einer ein strömendes Medium führenden, im wesentlichen geraden Coriolis-Leitung (1) eines Massendurchflußmeßgeräts, das nach dem Coriolis-Prinzip arbeitet, **dadurch gekennzeichnet, daß** die Enden der Coriolis-Leitung (1) zu sich aus transversalen Bewegungen der Enden der Coriolis-Leitung (1) zusammensetzenden, rotatorischen taumelnden Bewegungen um die Längsachse der Coriolis-Leitung (1) angeregt werden und die rotatorischen taumelnden Bewegungen des einen Endes der Coriolis-Leitung (1) um 180° phasenverschoben gegenüber den rotatorischen taumelnden Bewegungen des anderen Endes der Coriolis-Leitung (1) sind.

13. Verfahren nach Anspruch 12, **dadurch gekennzeichnet, daß** zur Erzeugung der rotatorischen taumelnden Bewegungen der Enden der Coriolis-Leitung (1) jeweils um 90° gegeneinander versetzte, transversale Bewegungen generierende Schwingungserzeugerelemente (26) verwendet werden und die einzelnen Schwingungserzeugerelemente (26) um 90° phasenverschoben, sinusförmig erregt werden.

## Claims

1. Mass flow meter that operates according to the Coriolis principle, with an essentially straight Coriolis tube (1) that conducts a flowing medium, with oscillation drivers (2, 3) assigned to the Coriolis tube (1) which excite the Coriolis tube (1), with at least one detector (4, 5) assigned to the Coriolis tube (1) and which registers Coriolis forces or Coriolis oscillations caused by Coriolis forces, and with a cylindrical shell (6) that encloses the Coriolis tube (1), **characterized in that** the Coriolis tube (1) is flexibly mounted in axial and radial direction to an inlet (7) and an outlet (8) of a cylindrical shell (6); the ends of the Coriolis tube (1) can be excited by the oscillation drivers (2, 3) generating transverse movements of the ends of the Coriolis tubes into wavering motion around the longitudinal axis of the Coriolis tube (1) and the wavering motions of one end of the Coriolis tube (1) are 180° out of phase with the wavering motions of the other end of the Coriolis tube (1).

2. Mass flow meter according to claim 1, **characterized in that** the oscillation drivers (2, 3) are made of individual driver elements (26) that generate transverse motions and are displaced by 90° with respect to each other, and the individual driver elements (26) can be sinusoidally excited with a phase shift of 90°.

3. Mass flow meter according to claim 1 or 2, **characterized in that** the inlet (7) and the outlet (8) are each formed as conically tapering diaphragms.

4. Mass flow meter according to any one of claims 1 to 3, **characterized in that** the inlet (7) and the outlet (8) are each formed in an arched shape, so that the inlet (7) and outlet (8) can each expand slightly without causing large stresses in the inlet (7), the outlet (8), or the Coriolis tube 1.

5. Mass flow meter according to any one of claims 1 to 4, **characterized in that** the mass flow meter has a meter housing and the cylindrical shell (6) forms the meter housing of the mass flow meter.

6. Mass flow meter according to claim 5, **characterized in that** the cylindrical shell (6) is made of metal and has recesses for accepting the Coriolis tube (1), the oscillation drivers (2, 3) and the detectors (4, 5).

7. Mass flow meter according to any one of claims 1 to 4, **characterized in that** a meter housing (9) is provided additionally to the cylindrical shell (6) and the Coriolis tube (1) is connected to the meter housing (9) by means of two connecting tubes (10, 11).

8. Mass flow meter according to claim 7, **characterized in that** the connecting tubes (10, 11) are attached to the inlet (7) and the outlet (8).

9. Mass flow meter according to claim 7 or 8, **characterized in that** the connecting tubes (10, 11) are formed as diaphragms.

10. Mass flow meter according to any one of claims 1 to 9, **characterized in that** the oscillation drivers (2, 3) are implemented as piezo-electric elements (24, 25) supported on springs (22, 23).

11. Mass flow meter according to any one of claims 1 to 10, **characterized in that** at least the Coriolis tube (1) consists of Duplex, stainless steel, nickel, titanium, or materials strengthened with carbon fibers or glass fibers.

12. Method for oscillation excitation of an essentially straight Coriolis tube (1) guiding flowing media of a mass flow meter that works according to the Coriolis principle, **characterized in that** the ends of the Coriolis tube (1) are excited by the oscillation drivers (2, 3) generating transverse movements of the ends of the Coriolis tubes into wavering motion around the longitudinal axis of the Coriolis tube (1) and the wavering motions of one end of the Coriolis tube (1) are 180° out of phase with the wavering motions of the other end of the Coriolis tube (1).

13. Method according to claim 12, **characterized in that** driver elements (26) generating transverse motions each displaced by 90° with respect to each other are used in order to generate the wavering motion of the ends of the Coriolis tube (1) and the individual driver elements (26) are sinusoidally excited with a phase shift of 90°.

## Revendications

1. Débitmètre massique fonctionnant selon le principe de Coriolis comprenant une conduite de Coriolis (1) sensiblement droite et guidant un milieu s'écoulant, comprenant des générateurs d'oscillations (2, 3) associés à la conduite de Coriolis (1) et excitant la conduite de Coriolis (1), comprenant au moins un transducteur (4, 5) associé à la conduite de Coriolis (1) et détectant des forces de Coriolis et/ou des oscillations de Coriolis reposant sur des forces de Coriolis et comprenant un cylindre de réception (6) recevant la conduite de Coriolis (1), **caractérisé en ce que** la conduite de Coriolis (1) est montée mobile dans la direction axiale et radiale par le biais d'une entrée (7) et par le biais d'une sortie (8) dans le cylindre de réception (6), les extrémités de la conduite de Coriolis (1) sont excitables par les générateurs d'oscillations (2, 3) en des mouvements autour de l'axe longitudinal de la conduite de Coriolis (1) se composant de mouvements transversaux des extrémités de la conduite de Coriolis en nutation rotatoire et les mouvements en nutation rotatoire d'une extrémité de la conduite de Coriolis (1) sont décalés en phase de 180° par rapport aux mouvements en nutation rotatoire de l'autre extrémité de la conduite de Coriolis (1).

2. Débitmètre massique selon la revendication 1, **caractérisé en ce que** sont prévus en tant que générateurs d'oscillations (2, 3) des éléments générateurs d'oscillations (26) décalés à chaque fois le long du pourtour de la conduite de Coriolis (1) de 90° l'un par rapport à l'autre et générant des mouvements transversaux et les éléments générateurs d'oscillations individuels (26) sont excitables de manière sinusoïdale avec un décalage de phase de 90°.

3. Débitmètre massique selon la revendication 1 ou 2, **caractérisé en ce que** l'entrée (7) et la sortie (8) sont réalisées à chaque fois sous forme de membrane s'élargissant de manière conique.

4. Débitmètre massique selon l'une quelconque des revendications 1 à 3, **caractérisé en ce que** l'entrée (7) et la sortie (8) sont réalisées à chaque fois en forme d'arc de sorte que l'entrée (7) et la sortie (8) peuvent se dilater à chaque fois légèrement sans que de fortes tensions ne se produisent dans l'entrée (7), dans la sortie (8) ou dans la conduite de Coriolis (1).

5. Débitmètre massique selon l'une quelconque des revendications 1 à 4, **caractérisé en ce que** le débitmètre massique présente un boîtier d'appareil de mesure et le cylindre de réception (6) forme le boîtier d'appareil de mesure du débitmètre massique.

6. Débitmètre massique selon la revendication 5, **caractérisé en ce que** le cylindre de réception (6) est fabriqué en métal et présente des évidements en vue de la réception de la conduite de Coriolis (1), du générateur d'oscillations (2, 3) et du transducteur (4, 5).

7. Débitmètre massique selon l'une quelconque des revendications 1 à 4, **caractérisé en ce qu'**en plus du cylindre de réception (6), un boîtier d'appareil de mesure (9) est présent et la conduite de Coriolis (1) est reliée avec le boîtier d'appareil de mesure (9) au moyen de deux conduites de liaison (10, 11).

8. Débitmètre massique selon la revendication 7, **caractérisé en ce que** les conduites de liaison (10, 11) sont raccordées à l'entrée (7) et à la sortie (8).

9. Débitmètre massique selon la revendication 7 ou 8, **caractérisé en ce que** les conduites de liaison (10, 11) sont réalisées en tant que membranes.

10. Débitmètre massique selon l'une quelconque des revendications 1 à 9, **caractérisé en ce que** les générateurs d'oscillations (2, 3) sont réalisés en tant qu'éléments piézoélectriques (24, 25) appuyés sur des éléments élastiques (22, 23).

11. Débitmètre massique selon l'une quelconque des revendications 1 à 10, **caractérisé en ce qu'**au moins la conduite de Coriolis (1) est constituée de duplex, d'acier inoxydable, de nickel, de titane ou de matériaux renforcés au carbone ou aux fibres de verre.

12. Procédé en vue de l'excitation par oscillations d'une conduite de Coriolis (1) sensiblement droite et guidant un milieu s'écoulant d'un débitmètre massique fonctionnant selon le principe de Coriolis, **caractérisé en ce que** les extrémités de la conduite de Coriolis (1) sont excitables en des mouvements autour de l'axe longitudinal de la conduite de Coriolis (1) se composant de mouvements transversaux des extrémités de la conduite de Coriolis (1) en nutation rotatoire et les mouvements en nutation rotatoire d'une extrémité de la conduite de Coriolis (1) sont décalés en phase de 180° par rapport aux mouvements en nutation rotatoire de l'autre extrémité de la conduite de Coriolis (1).

13. Procédé selon la revendication 12, **caractérisé en ce qu'**en vue de la génération des mouvements en nutation rotatoire des extrémités de la conduite de Coriolis (1), on utilise des éléments générateurs d'oscillations (26) générant des mouvements transversaux décalés à chaque fois de 90° l'un par rapport à l'autre et les éléments générateurs d'oscillations individuels (26) sont excités de manière sinusoïdale avec un décalage de phase de 90°.
